Europäisches Patentamt

European Patent Office

Office européen des brevets

(19)

(11) Veröffentlichungsnummer : **0 074 676**
**B1**

(12) **EUROPÄISCHE PATENTSCHRIFT**

(45) Veröffentlichungstag der Patentschrift :
**13.03.85**

(21) Anmeldenummer : **82201018.7**

(22) Anmeldetag : **13.08.82**

(51) Int. Cl.⁴ : **F 16 C   9/04**, F 16 C 33/06,
F 16 C 27/02

(54) **Radialgleitlager.**

(30) Priorität : **12.09.81 DE 3136199**

(43) Veröffentlichungstag der Anmeldung :
**23.03.83 Patentblatt 83/12**

(45) Bekanntmachung des Hinweises auf die Patenterteilung : **13.03.85 Patentblatt 85/11**

(84) Benannte Vertragsstaaten :
**AT DE FR GB**

(56) Entgegenhaltungen :
**DE-A- 2 359 634**
**DE-A- 3 023 438**
**DE-B- 1 270 894**
**DE-C-   311 504**
**FR-A- 1 153 939**
**FR-A- 2 333 158**
**US-A- 3 201 183**

(73) Patentinhaber : **KOLBENSCHMIDT Aktiengesellschaft**
**Christian-Schmidt-Strasse 8/12 Postfach 1351**
**D-7107 Neckarsulm (DE)**

(72) Erfinder : **Scheufler, Roland**
**Wilhelmstrasse 49**
**D-7107 Neckarsulm (DE)**

(74) Vertreter : **Fischer, Ernst, Dr.**
**Reuterweg 14**
**D-6000 Frankfurt am Main 1 (DE)**

## Beschreibung

Die Erfindung betrifft ein Radialgleitlager, bestehend aus zwei Lagerschalenhälften für Lagerungen von Brennkraftmaschinen, z. B. Hubzapfenlager, bei denen etwa gleiche Gas- und Massenkräfte vorhanden sind und über deren Umfang in Größe und Richtung in einem bestimmten Zyklus wechselnde Lagerbelastungen auftreten, wobei die beiden Lagerhälften unterschiedliche Verformungssteifigkeiten aufweisen und im eingebauten unbelasteten Zustand der Unterschied zwischen Lagerbohrungs- und Zapfendurchmesser für eine Lagerschalenhälfte ein anderer ist als für die andere Lagerschalenhälfte.

In einem Lager müssen die gesamten Führungskräfte und Lasten während des Betriebes allein vom Schmierfilm übertragen werden, um eine ausreichende Betriebssicherheit mit genügend langer Lebensdauer und geringen Reibungsverlusten zu erzielen. Die Trennung der Gleitflächen von Lager und Zapfen durch das Schmiermittel läßt sich sicherstellen, wenn bei der Lagergestaltung die Wahl und Sicherstellung eines sich verengenden Schmierkeils mit einer günstigen Neigung zwischen den Gleitflächen zur Erreichung der hydrodynamischen Tragfähigkeit beachtet werden. Die Schmierkeilform zwischen den Gleitflächen von Lager und Zapfen wird durch das Lagerspiel erzeugt. Wenn die Lagerkräfte in Größe und Richtung in einem bestimmten Zyklus wechseln, wie z. B. bei den meisten Verbrennungsmotoren und Kompressoren, wirkt sich jedoch das bei einer zylindrischen Lagerbohrung notwendige große relative Lagerspiel nachteilig auf die Laufruhe aus. Dieser Nachteil wird durch ovale Lagerbohrungen vermieden, weil damit ein kleineres Lagerspiel verwirklicht werden kann und ein zweiter Schmierkeil zur besseren Führung des Zapfens entsteht. Eine ovale Lagerbohrung läßt sich bei aus zwei Lagerschalenhälften bestehenden Radialgleitlagern einfach dadurch erreichen, daß die Wanddicke der Lagerschalenhälften nach der Trennebene hin abnimmt. Da die Trennebene immer im unbelasteten Bereich liegen muss, wird das Lagerspiel bei ovalen Lagerbohrungen in der Hauptbelastungsrichtung eingeengt. Noch günstigere Führungseigenschaften erhält man durch das sogenannte versetzt-ovale Radialgleitlager, bei dem die beiden, eine ovale Lagerbohrung aufweisenden Lagerschalenhälften versetzt gegeneinander in der Lagerung angeordnet sind. Durch diese Form der Lagerbohrung werden Schwingungen des Zapfens im Lager unterdrückt, die bei zylindrischen Lagerbohrungen manchmal zu unerwünscht großen Belastungen führen. Außerdem wird bei solchen Radialgleitlagern durch den Wanddickensprung in der Trennebene der eingebauten Lagerschalenhälften érreicht, daß sich der Schmierspalt in Drehrichtung erweitert.

In neuerer Zeit ist durch die DE-A-23 59 634 ein aus zwei Lagerschalenhälften bestehendes Radialgleitlager bekannt geworden, bei dem die beiden kreiszylinderförmigen Lagerschalenhälften im eingebautem Zustand einen innerhalb der Größe des mittleren zugelassenen Lagerspiels voneinander verschiedenen Radius aufweisen, wobei die Lagerschalenhälfte mit dem größeren Radius im Bereich der Lagerung mit der größeren elastischen Nachgiebigkeit des Lagerträgers angeordnet ist. Die Wanddicke jeder Lagerschalenhälfte ist jeweils über den Umfang konstant. Durch diese Maßnahmen soll erreicht werden, daß bei Lagerungen, bei denen infolge auf dem Umfang auftretender unterschiedlicher Zug- und Druckbelastungen das elastische Verhalten des einen Teils der Lagerung von dem des andern Teils der Lagerung verschieden ist, sich trotzdem im belasteten Zustand ein gleichmäßiges Lagerspiel einstellt. Diese angestrebte Wirkung wird jedoch nur bei relativ kleinen Belastungen erreicht. Bei vergleichsweise größeren Belastungen ist die unter Zugkraft eintretende Ovalverformung der Lagerung und damit auch der beiden Lagerschalenhälften so groß, daß es im Bereich der den größeren Radius aufweisenden, der größeren Verformung unterliegenden Lagerschalenhälfte im Bereich von 30 bis 60° beidseitig der auf der senkrecht zur Trennebene verlaufenden Ebene zur Ausbildung von den Schmierfilm unterbrechenden Druckstellen kommen kann, wodurch es zu beachtlichem Verschleiß kommen kann.

Es ist daher die Aufgabe der vorliegenden Erfindung, das eingangs beschriebene Radialgleitlager so zu gestalten, daß im belasteten Zustand trotz eines möglichst engen, im Bereich der senkrecht zur Tennebene der Lagerschalenhälften verlaufenden Ebene gleichen Lagerspiels zwischen Lagerbohrung und Zapfen die hydrodynamische Tragfähigkeit des Schmierfilms über den Umfang der Lagerbohrung immer gewährleistet ist.

Die Lösung dieser Aufgabe erfolgt in der Weise, daß die eine größere Verformungssteifigkeit aufweisende Hälfte der Lagerung eine kreiszylinderförmige und die eine kleinere Verformungssteifigkeit aufweisend Hälfte der Lagerung eine ovale Lager bohrung aufweist, und dass in der Trennebene (6) der beiden Lagerschalenhälften (4, 5) ein Wanddickensprung vorhanden ist.

Dabei ist es zweckmäßig, daß die kreiszylinderförmige Lagerschalenhälfte eine über den Umfang konstante Wanddicke besitzt.

An der Trennebene der beiden Lagerschalenhälften sollte sinnvollerweise ein Wanddickensprung zwischen den beiden Lagerschalenhälften vorhanden sein, damit die sich auf dem Zapfen abstützende kreiszylinderförmige Lagerschalenhälfte eine abstützende Funktion gegenüber der ovalen Lagerschalenhälfte ausüben kann.

Für die Ausbildung eines möglichst engen Lagerspiels ist es angebracht, daß die ovale Lagerschalenhälfte über einen Bereich von 0-20°, vorzugsweise 0-15°, beidseitig der auf der Trennebene senkrecht stehenden Ebene die gleiche Wanddicke wie die kreiszylinderförmige Lagerschalenhälfte aufweist.

Die ovale Lagerschalenhälfte kann zur Herstellung eines optimalen Lagerspiels über ihren Umfang unterschiedliche Ovalitäten besitzen.

In manchen Fällen ist es ausreichend, wenn in dem der größeren Verformung unterliegenden Abschnitt der Lagerbohrung eine kreiszylinderförmige Lagerschalenhälfte eingesetzt ist, die in den durch die Druckstellen gefährdeten Bereichen einen kreisabschnittförmigen Freischliff von 15-40 my Tiefe angebracht ist.

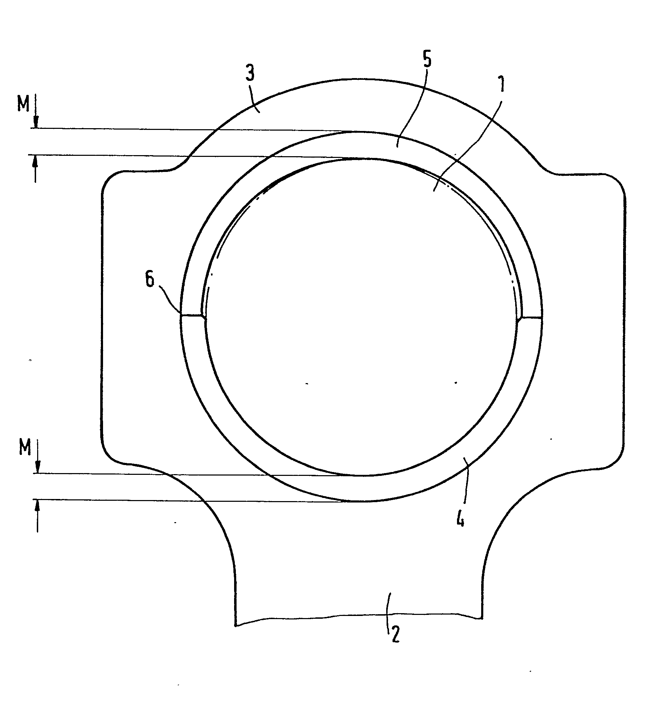

In der Zeichnung, die nachfolgend näher erläutert wird, ist ein entsprechend der Erfindung gestaltetes, in einer Lagerung eines Pleuels eingesetztes Radialgleitlager dargestellt, das nachfolgend näher erläutert wird :

In der Lagerung 1 eines Pleuels, bestehend aus der Pleuelstange 2 und dem Pleueldeckel 3, ist im pleuelstangenseitigen Teil der Lagerung 1 die die größere Belastung aufnehmende kreiszylinderförmige Lagerschalenhälfte 4 angeordnet, die über ihren Umfang eine konstante Wanddicke besitzt. Im pleueldeckelseitigen Teil der Lagerung 1 ist die die kleinere Belastung aufnehmende Lagerschalenhälfte 5 mit ovaler Lagerbohrung eingesetzt. In der Trennebene 6 der beiden Lagerschalenhälften 4, 5 ist ein Wanddickensprung vorhanden.

Die mit dem erfindungsgemäß gestalteten Radialgleitlager erzielten Vorteile bestehen insbesondere darin, daß sich bei Verformung der Lagerung unter relativ hoher Zugbelastung die ovale Lagerschalenhälfte so verformt, daß sich im Betriebszustand eine kreiszylindrische Lagergeometrie einstellt.

Damit bei der Montage die beiden Lagerschalenhälften nicht verwechselt werden können, sind diese zweckmäßigerweise mit Haltenasen unterschiedlicher Form, Anzahl, Abstand und/oder Abmessungen, oder auch nur mit Farbmarkierungen ausgestattet. So ist es z. B. möglich, die ovale Lagerschalenhälfte mit zwei und die kreiszylindrische Lagerschalenhälfte mit einer Haltenase oder die ovale Lagerschalenhälfte mit einer blauen und die kreiszylinderförmige Lagerschalenhälfte mit einer roten Markierung zu versehen.

## Ansprüche

1. Radialgleitlager, bestehend aus zwei Lagerschalenhälften (4, 5) für Lagerungen (1) von Brennkraftmaschinen, z. B. Hubzapfenlager, bei denen etwa gleiche Gas- und Massenkräfte vorhanden sind und über deren Umfang in Größe und Richtung in einem bestimmten Zyklus wechselnde Lagerbelastungen auftreten, wobei die beiden Lagerhälften unterschiedliche Verformungssteifigkeiten aufweisen und im eingebauten, unbelasteten Zustand der Unterschied zwischen Lagerbohrungs- und Zapfendurchmesser für die eine Lagerschalenhälfte (4) ein anderer ist als für die andere Lagerschalenhälfte (5), dadurch gekennzeichnet, daß die eine größere Verformungssteifigkeit aufweisende Hälfte (2) der Lagerung mit einer kreiszylinderförmigen (4) und die eine kleinere Verformungssteifigkeit aufweisende Hälfte (3) der Lagerung eine ovale Lagerbohrung (5) aufweist und daß in der Trennebene (6) der beiden Lagerschalenhälften (4, 5) ein Wanddickensprung vorhanden ist.

2. Radialgleitlager nach Anspruch 1, dadurch gekennzeichnet, daß die kreiszylinderförmige Lagerschalenhälfte (4) eine über ihren Umfang konstante Wanddicke besitzt.

3. Radialgleitlager nach einem der Ansprüche 1 oder 2, dadurch gekennzeichnet, daß die ovale Lagerschalenhälfte (5) über ihren Umfang unterschiedliche Ovalitäten aufweist.

4. Radialgleitlager nach einem der Ansprüche 1 bis 3, dadurch gekennzeichnet, daß die ovale Lagerschalenhälfte (5) über einen Bereich von 0 bis 20°, vorzugsweise 0 bis 15°, beidseitig der auf der Trennebene (6) senkrechten Ebene eine der Wanddicke der kreiszylinderförmigen Lagerschalenhälfte (4) entsprechende Wanddicke aufweist.

## Claims

1. A radial plain bearing comprising two half shells (4, 5) for bearings (1) in internal-combustion engines, such as crank pins, the bearing underlaying nearly equal-sized gas- and inertial forces and carrying loads changing in size and direction in a determined cycle over the circumference, the one bearing half having different resistance to deformation from that of the other bearing half and the difference between the bore diameter of the bearing and the diameter of the journal being another one for the one half shell (4) than far the other half shell (5) characterized in that the bearing half (2) with the greater resistance to deformation has a circular cylinder bore (4) and the bearing half (3) with the lower resistance to deformation has an oval bore (5) and the wall thickness of the one half shell (5) is recessed with respect to the other half shell (4) in the parting plane (6).

2. A radial plain bearing according to claim 1 characterized in that the circular cylinder half shell (4) has a constant wall thickness over the circumference.

3. A radial plain bearing according to claim 1 or 2 characterized in that the oval half shell (5) has different ovalties over the circumference.

4. A radial plain bearing according to claims 1 to 3 characterized in that the oval half shell (5) has the same wall thickness than the circular cylinder half shell (4) over an area of 0 to 20°, especially 0 to 15°, on both sides of the plane vertically to the parting plain (6).

## Revendications

1. Palier radial lisse, constitué de deux demi-coquilles de coussinet (4, 5) pour des paliers (1) de moteurs à combustion interne, par exemple des paliers de vilebrequins, dans lesquels des forces à peu près égales dues aux gaz et aux masses sont présentes et sur le pourtour desquelles se produisent des charges sur le palier alternant en grandeur et en direction suivant un cycle déterminé, les deux moitiés de palier présentant des rigidités à la déformation différentes et, à l'état monté, et non chargé, la différence entre le diamètre de l'alésage du palier et le diamètre du tourillon pour l'une des demi-coquilles de coussinet (4) étant autre que pour l'autre demi-coquille de coussinet (5), caractérisé en ce que la moitié (2) du palier, qui présente la rigidité à la déformation la plus grande, présente une forme cylindrique circulaire (4) et la moitié (3) du palier, qui présente la rigidité à la déformation la plus petite, présente un alésage de palier (5) ovale, et en ce que dans le plan de séparation (6) des deux demi-coquilles de coussinet (4, 5) est prévue une variation brusque de l'épaisseur de la paroi.

2. Palier radial lisse suivant la revendication 1, caractérisée en ce que la demi-coquille de coussinet (4) de forme cylindrique circulaire a une épaisseur de paroi constante sur son pourtour.

3. Palier radial lisse suivant l'une des revendications 1 ou 2, caractérisé en ce que la demi-coquille de coussinet (5) ovale présente des ovalisations différentes sur son pourtour.

4. Palier radial lisse suivant l'une des revendications 1 à 3, caractérisé en ce que la demi-coquille de coussinet (5) présente sur une région de 0 à 20°, de préférence de 0 à 15°, des deux côtés du plan perpendiculaire au plan de séparation (6), une épaisseur de paroi correspondant à l'épaisseur de paroi de la demi-coquille de coussinet (4) de forme cylindrique circulaire.